# EUROPEAN PATENT APPLICATION

(11) **EP 2 237 202 A1**
(43) Date of publication of application: **06.10.2010**
(21) Application number: 10075134.6
(22) Date of filing: 25.03.2010
(51) Int. Cl.: G06Q 10/00

(54) **Method of and computer program for managing an agricultural device**

(30) Priority: 02.04.2009 NL 1036806
(71) Applicant: Lely Patent N.V., 3147 PA Maassluis (NL)
(72) Inventor: Loosveld, Serge Louis, 3147 PA Maassluis (NL)
(74) Representative: Corten, Maurice Jean F.M.

(57) **Abstract**

The invention comprises a method of managing an agricultural device. The method comprises:
the connection of the agricultural device to a network;
the collection of operational data relating to the agricultural device;
the granting of an access right in respect of the collected operational data to an other entity, such as an other agricultural device, which is similarly connected to the network;
the reception of data from the other entity in response to the access right; and the management of the agricultural device on the basis of the collected operational data and the data from the other entity.

## Description

The invention relates to a method of managing an agricultural device and to a computer program for carrying out the method.

It is known for an agricultural device, such as a milking device which is used to milk dairy animals such as cows, goats, llamas, buffalos or any other dairy animal, to be managed with a suitable management program. The management program, which is run, for example, on a personal computer, notebook or the like, can record measured data relating to the milking machine and/or dairy animals, record error messages, identify anomalies, define settings in the milking device, and the like. Examples of anomalies may include: sickness of an animal, contamination of milk or milk not suitable for consumption, etc. For this purpose, the management system can use a multiplicity of data, such as the time between consecutive milkings of the same animal, measurements carried out on the milk, such as conductivity, colour, optical absorption and/or transmission in specific optical wavelength ranges, quantity of milk per milking, etc. Feed data, for example the quantity of feed consumed by the dairy animal, data relating to the behaviour of the animal, such as the heart rate, mobility, composition of excrement, etc., can also be used. A multiplicity of sensors, such as a step counter, a heart rate monitor, chemical analysis devices, a camera for visible light and/or infrared, etc., can be provided for this purpose. A manager of the milking device can also input data, such as threshold values or required values, into the management system. An example of such data is a rejection criterion. If, for example, a manager discovers that an animal is sick, these parameters relating to this animal may change, for example the offering of an other quantity of feed, the addition of medication to the feed, the separation of the milk produced by the animal concerned, the admission of the animal to the milking device with an other time interval, etc. All of the aforementioned data input into, recorded by or otherwise managed by the management system of the milking device can be regarded as examples of what is referred to as "operational data". Other data may possibly also be included, such as operating characteristics and/or equipment characteristics (for example an equipment version, the race of cows, the type of stall). Data of this type may be useful for the grouping of operations.

The milking device may comprise a fully or partially automated milking robot or a milking machine, wherein teat cups are manually attached to the dairy animal.

It is similarly known for the management system to be connected via a network to a central device, such as a server on the premises of, for example, a supplier or service-providing party, in order to be able to carry out remote maintenance therefrom, such as the upgrading of software, detection of defects, diagnosis of the milking device, identification of a need for on-site maintenance, etc. The management system can be connected via the Internet or a telecommunications connection to the central device for this purpose.

The object of the invention is to improve the management of the agricultural device.

To achieve this object, the method of managing an agricultural device comprises, according to the invention:
the connection of the agricultural device to a network;
the collection of operational data relating to the agricultural device;
the granting of an access right in respect of the collected operational data to an other entity which is similarly connected to the network;
the reception of data from the other entity in response to the access right, and
the management of the agricultural device on the basis of the collected operational data and the data from the other entity.

The agricultural device can thus be managed on the basis of data obtained from the agricultural device and from an other entity (for example reference values derived from operational data from other agricultural devices, settings advised by an external party such as an agricultural consultant, settings advised by a service organisation, settings advised by an other user of an agricultural device, and the like), with which, for example, a clearer insight can be gained into the operation of an agricultural device. In order to prevent a user of an agricultural device from allowing his or her data to be viewed by any other random user of an other agricultural device, thereby perhaps being able to access commercially sensitive or confidential information, provision of (for example reciprocal) access rights is provided. Only if one user has granted permission to another user can the management system of the user concerned gain access to data from, or data derived from, the operational data of the other user (such as an other agricultural device), wherein the operational data may comprise, for example, a summary, report, statistics or the like.

The network may comprise the Internet or any other public or private data network or telecommunications network, operating via any suitable protocol or protocols. The agricultural device may comprise any agricultural device controllable or manageable by a computer, the device may be stationary or mobile, the device may be intended for agriculture or livestock breeding, etc. A number of examples of a device of this type are a milking device, a feed device, a robot such as an autonomous robot, for example a manure robot, a robot to isolate a grazing area, a feed robot, etc. In the context of this document, the term "milking device" may comprise both a milking robot and a milking device which is to be attached manually by a user to teats of the dairy animal. The agricultural devices may each be provided with their own management device; however, it is also possible for two or more agricultural devices to make use (via the network) of a shared management device, wherein operational data can then be managed, stored and the like separately for each agricultural device. The operational data may be collected through storage of the data, or data derived from the data (such as averages, deviations, outliers, alarms, occurrence of events, or other data) in a memory device, such as a magnetic memory, a data storage card, an electronic memory, etc.

In one preferred embodiment, the other entity comprises an other agricultural device and the data received from the other entity comprise operational data from the other agricultural device. Data originating from one or more other agricultural devices can thus be used in the management of an agricultural device. The other entity comprises an, in particular similar, other agricultural device. As a result thereof, the data received are very relevant to the management of the agricultural device. By 'similar' is meant here: having the same purpose. A milking robot will thus have the same purpose as a conventional milking device with manual teat cup connection, i.e. the milking of a dairy animal. Therefore, milking settings and the like can certainly be equal for both devices. Of course, some settings, such as admission criteria or teat detection algorithms, can be relevant to only one of the devices. Therefore, for that specific purpose, a conventional milking device and a milking robot are different from each other.

By taking operational data from one or more other agricultural devices into consideration, the technical problem of improving the management of an individual agricultural device can be solved, given that, in the management operations (such as the identification of rejection limits for milk, the detection of faults or malfunctions, the issue of warning messages to a user and many other examples), a larger quantity of data, i.e. also data originating from other agricultural devices or other sources, such as consultants, is used as a reference framework (for example for determining suitable threshold values, rejection limits, settings, time windows between consecutive milkings, feed schedules, etc.).

Furthermore, one aspect of the invention can also be described as a method of managing at least two agricultural devices, comprising:
the connection of the agricultural devices to a network;
the collection of operational data relating to each of the at least two agricultural devices;
the provision of reciprocal access rights to the collected operational data, and
the management of the agricultural devices on the basis of the collected operational data.

The management of the agricultural device may comprise:
the definition of a benchmark for the agricultural device from operational data from at least the other agricultural device, and
the comparison of the operational data of the agricultural device with the benchmark.

By defining a benchmark from data of an other agricultural device, a comparison can be made in a simple and clearly understandable manner (for example in the form of software) between the operational data of the agricultural device and a standard, derived from the operational data of one or more other agricultural devices. By using operational data of a plurality of other agricultural devices, fluctuations will average out more, as a result of which a better reference framework for management can generally be obtained. A manager can similarly enter the other agricultural devices of which data must be used to define the benchmark concerned, so that the user himself can select (for example from the group with which reciprocal information is exchanged) a number of suitable data elements for the benchmark concerned.

The method may furthermore comprise: the definition of a setting of the agricultural device on the basis of the operational data of the agricultural device and the operational data of the other agricultural device. One or more parameters of the management device can thus be set not only on the basis of the operational data which have been collected during the operation of the agricultural device concerned, but also any given data obtained from the operation of one or more other agricultural devices can also be used.

The granting of the access right can take place in response to a respective release instruction by a manager of the respective agricultural device, so that a user has control over who gains access to operational data (or data derived therefrom) of the respective agricultural device. The (for example reciprocal) release of manager contact data in response to the release instruction can also be provided here. Examples of manager contact data may, for example, include: e-mail addresses or other contact data, access to each other's user profiles, location data and operational information, or other data which one user might wish to share with other users. It is thus possible to allow the users to exchange information with one another relating to business operations, management of the milking process, livestock management or any other information relevant to the parties concerned.

It is also possible for settings for the at least one agricultural device to be defined from the operational data which are collected by the agricultural device or devices (for example by a central computer device connected to the network) and to be transmitted via the network to the at least one agricultural device. Thus, it is possible, for example, for a manufacturer or service organisation of the agricultural devices, where operational data of a large number of agricultural devices are available via the network, to use these data (autonomously or through proposal to a user of the agricultural device) to carry out settings, adjustments, etc. of one or more parameters (such as, for example, threshold values, or one or more of the other examples mentioned earlier in this document). An improvement in the management of a large number of agricultural devices can thus be achieved centrally, given that use can be made of the operational data and expertise of a large number of users.

Here, it is also possible to effect different settings for different agricultural devices or groups thereof, and thus to collect operational data during operation therewith, to compare the results obtained with one another and to be able to derive a most suitable setting from the different settings on the basis thereof. An optimum setting can thus be quickly found over a multiplicity of agricultural devices. A process of this type can also be performed repetitively, for example to define an optimum value (or a series of optimum values or an optimum range) for an other parameter also, or to repeat a definition of this type in order to be able to respond to changing operating circumstances or environmental factors.

Furthermore, it should be noted that the terms "gegevens" and "data" are used synonymously in this document. It should also be noted that the method described in this document must be understood as a method which is to be implemented by a computer, referred to as a "computer implemented method".

The invention also relates to a computer program comprising program instructions for carrying out the method according to the invention, if the program is loaded onto a data processing device, such as a computer.

Further characteristics, advantages and effects of the invention will become clear with reference to the attached drawing and the following description, in which a non-limiting example embodiment is presented, in which:
Figure 1 is a block diagram showing an example embodiment of agricultural devices connected via a network, on the basis of which an example embodiment of the method according to the invention is illustrated, and
Figure 2 is a block diagram showing an example embodiment of an other embodiment.

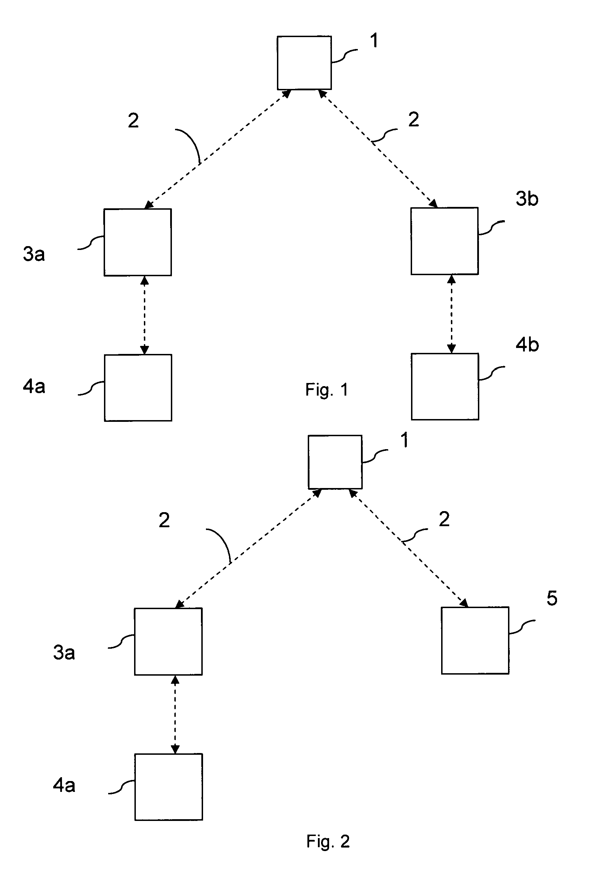

Figure 1 shows, very schematically, a server 1 which is connected via a network 2 (such as the Internet) to a first and a second management computer 3a, 3b, each of which is connected via a suitable data communications connection to a respective agricultural device, in this example a milking device 4a, 4b, such as a milking robot. The management computers may comprise, for example, a personal computer with operational management software thereon, a memory for storing operational data which, for example, are obtained during the operation of the milking device, and a communications means, such as a modem, router or the like, for setting up a connection to the Internet. A connection can be set up from the server via the network to the management computers of the milking robots. In managing the robot 4a, the computer 3a can use management data of the two milking robots 4a and 4b. In this example embodiment, a manager of the robot 4b has given permission via the management computer 3b for operational data to be exchanged with the management computer 3a for this purpose. The reciprocal exchange can take place directly; however, it is also possible for the exchange to take place via the server, wherein the operational data concerned can be stored on the server, or in a memory or computer connected thereto. On the basis of the operational data from the robot 4b or a number of other robots (not shown), a benchmark can be defined and the management software of the robot 4a can compare the performance of the robot 4a with the benchmark.

A setting of the agricultural device can be defined on the basis of the operational data of the agricultural device and the operational data of the other agricultural device. The operational data or part thereof can be released in response to a release instruction by a manager of the respective agricultural device. Manager contact data can also be released in the process, so that the managers concerned can exchange information with one another. Thus, a manager (also referred to in this document as a user) of an agricultural device can set up a network of users, consultants and the like.

It is also possible to define settings centrally, for example, in a central computer which is connected to the network, from the collected operational data of the agricultural devices for at least one of the agricultural devices and to transmit these via the network to the agricultural device(s) concerned.

In order to achieve an optimisation, different settings can also be applied in the agricultural devices or for groups thereof, the results obtained can be compared with one another, a most suitable setting can be derived therefrom and can be transmitted to the agricultural devices. This can, for example, be repeated periodically in order to define a most suitable setting.

Figure 2 shows a variant of the embodiment which is described with reference to Figure 1. In this example, a computer 5 of a consultant is connected to the network. If the user of the management device 3a grants access to the consultant to view or download operational data (or a part thereof) via the network, the consultant can, on the basis thereof, offer advice on the management of the milking device 4a and can transmit this in the form of data (for example settings such as setting values, threshold values, etc.) to the management device 3a and run this automatically or have it run by the user of the management device 3a.

## Claims

1. Method of managing an agricultural device, comprising:
the connection of the agricultural device to a network;
the collection of operational data relating to the agricultural device;
the granting of an access right in respect of the collected operational data to an other entity which is similarly connected to the network;
the reception of data from the other entity in response to the access right; and
the management of the agricultural device on the basis of the collected operational data and the data from the other entity.

2. Method according to Claim 1, wherein the other entity comprises an, in particular similar, other agricultural device and the data received from the other entity comprise operational data of the other agricultural device.

3. Method according to Claim 2, wherein the management of the agricultural device comprises:
the definition of a benchmark for the agricultural device from operational data of at least the other agricultural device; and
the comparison of the operational data of the agricultural device with the benchmark.

4. Method according to Claim 2 or 3, furthermore comprising:
the definition of a setting of the agricultural device on the basis of the operational data of the agricultural device and the operational data of the other agricultural device.

5. Method according to any one of the preceding claims, wherein the granting of the access right takes place in response to a release instruction by a manager of the respective agricultural device.

6. Method according to Claim 5, wherein management contact data are also released in response to the release instruction by the manager.

7. Method according to any one of the preceding claims, comprising the definition of settings from the collected operational data of the agricultural devices for at least one of the agricultural devices; and
the transmission via the network of the defined settings to the at least one agricultural device.

8. Method according to any one of Claims 2-7, comprising the definition of other settings from the collected operational data of the at least two agricultural devices for each of the agricultural devices or for groups thereof;
the transmission via the network of the defined settings to the respective agricultural devices;
the collection of operational data during operation with the transmitted settings;
the comparison of the results obtained with one another;
the derivation from the other settings, on the basis of the comparison, of a most suitable setting; and
the transmission of the most suitable setting to the agricultural devices.

9. Method according to Claim 8, comprising the periodic repetition of the definition of the most suitable setting.

10. Computer program comprising program instructions for carrying out the method according to any one of Claims 1-9, if the program is loaded onto a data processing device, such as a computer.
